(19) Europäisches Patentamt / European Patent Office / Office européen des brevets

(11) **EP 4 390 532 A1**

(12) **EUROPEAN PATENT APPLICATION**

(43) Date of publication:
**26.06.2024  Bulletin 2024/26**

(21) Application number: **22216005.3**

(22) Date of filing: **22.12.2022**

(51) International Patent Classification (IPC):
**G02F 1/35** (2006.01)

(52) Cooperative Patent Classification (CPC):
**G02F 1/3528; G02F 1/365;** G02F 2201/02;
G02F 2202/32

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NKT Photonics A/S
3460 Birkerød (DK)**

(72) Inventors:
• **MOLTKE, Asbjørn Meldgaard
2800 Kgs. Lyngby (DK)**
• **ANDERSEN, Thomas Vestergaard
3460 Birkerød (DK)**
• **PEDERSEN, Martin Erland Vestergaard
3460 Birkerød (DK)**
• **SMITH, Cameron Lesley Colwell
3460 Birkerød (DK)**
• **BANG, Ole
3460 Birkerød (DK)**

(74) Representative: **Zacco Denmark A/S
Arne Jacobsens Allé 15
2300 Copenhagen S (DK)**

(54) **A SUPERCONTINUUM LIGHT SOURCE AND A SCATTEROMETRY DEVICE**

(57)     Disclosed is a supercontinuum light source, comprising: a pulsed light source configured to emit a train of light-pulses; a modulation-module configured to modulate the train of light-pulses, thereby producing a modified train of light-pulses, wherein the modified train of light-pulses comprises a plurality of modified light-pulses, wherein each of the plurality of modified light-pulses is defined by at least: a peak-power, $P_0$, and a pulse width, $T_0$, and; one or more non-linear element(s) being defined by at least: a non-linear coefficient, $\gamma$, and a group-velocity dispersion parameter, $\beta_2$, whereby each of the plurality of modified light pulses is further defined by: a soliton number, N, where $N^2 = T_0^2 \gamma P_0/|\beta_2|$, wherein said non-linear element(s) is/are configured to spectrally broadening the plurality of modified light-pulses, thereby generating a train of supercontinuum-pulses.

Fig. 5

EP 4 390 532 A1

**Description**

**Field of the invention**

The present disclosure relates generally to a supercontinuum light source, more specifically to a modulated supercontinuum light source. Further, the present disclosure relates to a scatterometry device comprising a supercontinuum light source.

**Background**

Broadband optical light sources are used in many applications, for example in Optical Coherence Tomography (OCT), fluorescence microscopy or spectroscopy. There may arise situations in which the application of a broadband optical light source is limited by the minimum power spectral density (PSD) of the generated broadband light that is available in a desired wavelength range.

To solve this problem, US 2016/0164242 and US 2009/095890 disclose a modulator being used to modulate the pump laser radiation in a supercontinuum system, whereby the PSD becomes flatter.

The application, US 2021/0364885, discloses also a modulator being used to modulate pump laser radiation comprising a train of radiation pulses to provide modulated pump laser radiation, whereby a supercontinuum radiation source is provided with both scaled PSD and high uniformity of the average output power.

The article, "Spectral broadening of ultraviolet dispersive waves in gas-filled hollow-core fiber using pump pulse modulation", in Optics Letters, Vol. 45, No. 24/15 December 2020, by Callum R. Smith et al. discloses also a modulator being used to modulate the pump laser radiation in a supercontinuum system, whereby the PSD of a part of the ultraviolet (UV) spectrum becomes flatter.

Both the application US 2021/0364885 and the article by Callum R. Smith disclose that a broader and flatter spectrum directly benefits spectroscopic scatterometry, particularly because the flatter spectrum ensures suitable power levels over a wider bandwidth.

However, although the prior art disclose that the PSD of a supercontinuum light source may be optimized, such as by optimizing the pulses of the modulator, for example such that it is suitable for scatterometry, none of the prior art discloses an actual optimal solution.

In view of the above, there is a desire to provide a light source and/or a device, such as for scatterometry, which is optimized to provide a very broad and flat spectrum.

**Summary**

It is an objective of this disclosure to provide a light source and a device that is optimized to provide a very broad and flat spectrum.

Further, it is an objective of this disclosure to provide an understanding on how to optimize a light source and a device such that its spectrum becomes very broad and flat.

These and other objectives have been solved by the light source and device as defined in the claims and as described below in the present disclosure.

In one aspect of the disclosure, there is disclosed a supercontinuum light source, comprising:

- a pulsed light source configured to emit a train of light-pulses;
- a modulation-module configured to modulate the train of light-pulses, thereby producing a modified train of light-pulses, wherein the modified train of light-pulses comprise a plurality of modified light-pulses, wherein each of the plurality of modified light-pulses is defined by at least:

  ○ a peak-power, $P_0$, and
  ○ a pulse width, $T_0$, and;

- one or more non-linear element(s) being defined by at least:

  ○ a non-linear coefficient, $\gamma$, and
  ○ a group-velocity dispersion parameter, $\beta_2$,

whereby each of the plurality of modified light-pulses entering the nonlinear element(s) is defined by:

  ○ a soliton number, N, where $N^2 = T_0^2 \gamma P_0 / |\beta_2|$.

Further, said non-linear element(s) is/are configured to spectrally broadening the plurality of modified light-pulses, thereby generating a train of supercontinuum-pulses. Even further, the plurality of modified light-pulses entering the non-linear element is further defined by having:

- a maximum soliton-number, $N_{max}$, and
- a minimum soliton-number, $N_{min}$.

Preferably, the plurality of modified light-pulses is modified such that:

- the pulse soliton-modulation-depth, $dN = (N_{max}-N_{min})/(N_{max}+ N_{min})$, is larger than 6%.

The soliton-number, N, is a well-known defined quantity, see for example the article "Measurement of the soliton number in guiding media through continuum generation", Optics Letters, Vol. 45, Issue 16, pp. 4432-4435 (2020), by David Castelló -Lurbe et al, also explaining how the coefficient $\gamma/\beta_2$ can be directly measured.

The prior art, as cited in the background section, does not disclose the soliton number, N, in relation to modulating the pump laser radiation. However, some of the prior art, such as the article by Callum R. Smith et al, discloses instead only the pulse energy, $E_0$, and the pulse width, $T_0$, and not specific values for $\gamma/\beta_2$.

However, since the coefficient, $\gamma/\beta_2$, is a constant for a given non-linear element, such as an optical fiber or waveguide, the expression for dN, as here disclosed, may be written as:

$$dN = (N_{max}-N_{min})/(N_{max}+ N_{min})$$

$$= |(T_{0,max} P_{0,max}^{1/2} - T_{0,min} P_{0,min}^{1/2})|/(T_{0,max} P_{0,max}^{1/2} + T_{0,min} P_{0,min}^{1/2}).$$

Further, since $P_0$ is proportional to $E_0/T_0$, the above expression may be rewritten as:

$$dN = |((T_{0,max}E_{0,max})^{1/2} - (T_{0,min}E_{0,min})^{1/2})|/((T_{0,max} E_{0,max})^{1/2} + (T_{0,min} E_{0,min})^{1/2}).$$

With this expression, one may easily compare a given setup, where for example only the energies $E_{0,max}$ and $E_{0,min}$ and the related pulse widths $T_{0,max}$ and $T_{0,min}$, respectively, are known, with the herein disclosed light source.

In relation to the above expression, it is to be noted that just because the maximum pulse energy $E_{0,max}$ is maximum, it is not given that the related pulse width, $T_{0,max}$ is also maximum. Accordingly, it is also to be noted that just because the minimum pulse energy $E_{0,max}$ is minimum, it is not given that the related pulse width, $T_{0,min}$ is a minimum. In other words, the maximum for $E_0$ and $T_0$ may not belong together. With this in mind, it is possible, with the above expression, to switch $N_{max}$ and $N_{min}$. It is for this reason why the nominator in the above expression has an absolute value.

To avoid switching $N_{max}$ and $N_{min}$, and to generalize the expression, the above expression is rewritten as:

$$dN(E_0, T_0) = (N_{max}(E_0, T_0)-N_{min}(E_0, T_0))/(N_{max}(E_0, T_0)+ N_{min}(E_0, T_0)),$$

where $N_{max}(E_0, T_0) > N_{min}(E_0, T_0)$ and $N_{max}(E_0, T_0) = max(E_0T_0)$ and $N_{min}(E_0, T_0) = min(E_0T_0)$.

In other words, $N_{max}(E_0, T_0)$ is provided by the product of $E_0T_0$ that yields a maximum, whereas $N_{min}(E_0, T_0)$ is provided by the product of $E_0T_0$ that yields a minimum. It is to be noted that neither $N_{max}(E_0, T_0)$ nor $N_{min}(E_0, T_0)$ are to be referred as the maximum soliton number $N_{max}$ or the minimum soliton number $N_{min}$, but only a number that is proportional thereto. However, in the calculation of dN, the proportionally factors cancel out, so it does not matter that $N_{max}(E_0, T_0)$ and $N_{min}(E_0, T_0)$ are only proportional to the soliton-number, N.

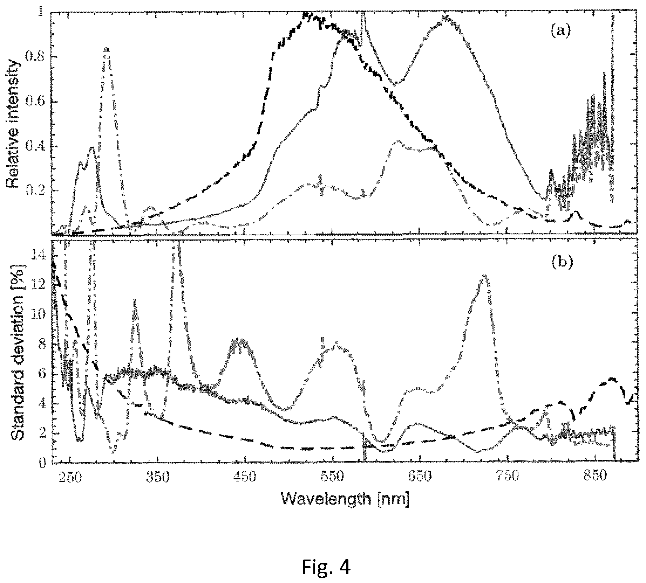

To provide an example of how to calculate dN when only E and T are known, the article by Callum R. smith et al., and the therein disclosed modulation scheme, is consulted. In this article, it is seen from Fig. 4(c) that a pulse sequence has pulses with a first pulse energy of $E_{0,1}$ = 17.4 μJ and a related pulse width of $T_{0,1}$ = 32.2 fs (obtained from C5 in Fig. 4.(c)). The product of these two values is $N_1$ = 560.28 μJ fs. It is also seen that a pulse sequence of Fig. 4(c) has pulses with a second pulse energy of $E_{0,2}$ = 13.1 μJ and a related pulse width of $T_{0,2}$ = 59.9 fs (obtained from C1 in Fig. 4.(c). The product of these two values is $N_2$ = 784.69 μJ fs. Accordingly, $N_{max} = N_2$, and $N_{min}=N_1$. With these values, dN is calculated to be dN = 5.5%. This is the maximum dN as is derivable from the article by Callum R. smith et al. which is lower than the presently disclosed value of dN being larger than 6%.

None of the other prior art documents, as described in the background section, disclose specific values for the pulse energy or maximum pulse power and the related pulse width, and therefore cannot be compared to the presently disclosed light source.

The inventors of the present disclosure have found that when using the pulse soliton-modulation-depth, dN, according to the present disclosure, and a spectrometer to measure the average output power of the supercontinuum light source over a time-period of less than 60 seconds, such as less than 5 seconds, such as less than 1 second, which in one embodiment defines a measured spectrum, then the PSD becomes particularly uniform and with high values in the entire measured spectrum. The measured spectrum may in one embodiment range from the visible domain and into the UV domain. The UV domain may in one embodiment range from 100 nm to less than 400 nm, such as to 380 nm.

More specifically, the inventors have found when using the pulse soliton-modulation-depth, dN, according to the present disclosure, then the measured spectrum may be with powers or intensities that may be above the noise-floor of a spectrometer, or more accurately within the dynamic range of the spectrometer.

Stated differently, by the present disclosure, the inventors have found a solution to raise the measured spectrum to above the noise-floor of a spectrometer. In a preferred embodiment, the measured spectrum spans more than a part of the UV-domain, or more than the visible domain. Most specifically, the inventors have found that when the pulse soliton-modulation depth, dN, is as specified according to the present disclosure, then dN is responsible for eliminating regions within the measured spectrum of very low power and correspondingly high noise to increase the overall signal-to-noise ratio (SNR).

A spectrum with the characteristics as described above is well-suited for scatterometry for example. Accordingly, the present disclosure provides a measured spectrum, which is particularly applicable in scatterometry.

Hence, in a second aspect of the present disclosure, there is provided a scatterometry device, comprising:

- the supercontinuum light source according to the first aspect; and
- a spectrometer configured to measure the spectrum of the train of super-continuum-pulses, whereby a measured spectrum is provided.

## Brief description of the drawings

The above and/or additional objects, features and advantages of the present disclosure, will be further described by the following illustrative and non-limiting detailed description of embodiments of the present disclosure, with reference to the appended drawing(s), wherein:

**Fig. 1** shows an example of how light-pulses with different energies generate a supercontinuum spectrum at the output of a fiber with a fixed length.

**Fig. 2** shows an example of a plurality of modified light-pulses according to the present disclosure.

**Fig. 3** shows an example of four individual spectra (colored curves) and the composite modulated spectrum (black curve) generated by the modified train of pulses as exemplified in **Fig. 2.**

**Fig. 4** shows in (a) an example of a spectrum generated by a modulated supercontinuum light source according to the present disclosure (green curve) in comparison to a spectrum generated by a non-modulated source (yellow curve) and a plasma lamp (black curve). In (b) is shown the corresponding standard deviation.

**Fig. 5** shows an example of a supercontinuum light source according to the present disclosure.

## Detailed description

*Non-linear element(s)*

In one embodiment, the one or more non-linear element(s) is a single hollow-core fiber. In some embodiments, the hollow-core fiber has a length that is less than 1 m, preferably less than 0.5, most preferably around 30 cm.

More preferably, in another embodiment, the one or more non-linear element(s), such as a single hollow-core fiber, is filled with a gas, most preferably a noble gas, such as Argon or Neon. A gas-filled hollow-core fiber may be responsible for spectrally broadening the plurality of modified light-pulses into the UV domain. In a most preferred embodiment, the non-linear element is filled with a gas under pressure, for example a pressure of more than 1 bar, more than 2 bars, more than 3 bars, or more than 4 bars. The pressure and/or the type of gas may be adjusted according to providing a desired wavelength in the UV-domain. For example, to provide a spectrum that spans from around 210 nm and up to 900 nm, it may be found that the nonlinear element(s) may be filled with Argon at a pressure to above 4 bars.

In combination with the disclosed dN, the full spectrum (i.e. from 210 nm to 900 nm) is raised to a level that is higher than if the modulation would have been turned off, or if the modulation would be with dN of less than the presently disclosed dN.

In yet another embodiment, the one or more non-linear element(s) comprise(s) a non-linear fiber, such as a solid-core photonic crystal fiber, and/or a hollow-core fiber, and/or a gas-filled hollow-core fiber, and/or a solid-core step-index fiber, and/or a graded-index fiber, and/or a ZBLAN fiber, and/or a tellurite fiber, and/or a chalcogenide fiber. The nonlinear fiber may for example be made of or comprise silica.

In some embodiments, the one or more non-linear element(s) comprise(s) a non-linear crystal.

*Pulsed light source and modulation-module*

In one embodiment, each of pulses in the train of light-pulses emitted from the pulsed light source is defined by a center wavelength being between 1000 nm and 1100 nm, preferably around 1030 nm or 1064 nm. In some embodiments, the light source is an Ytterbium laser.

In another embodiment, each of the pulses in the train of light-pulses emitted from the pulsed light source is defined by a center wavelength being between 700 nm and 900 nm, preferably around 800 nm. For example, to deliver such a center wavelength, the pulsed light source may be a Ti:Sapphire laser.

In yet another embodiment, each of the pulses in the train of light-pulses emitted from the pulsed light source is defined by a center wavelength being around 2 microns. For example, to deliver such a center wavelength, the pulsed light source may be a Thulium laser.

The pulsed light source, which may also be referred to as a pulse generator, may be a laser or a laser diode. The pulses from the pulsed light source are sometimes referred to as seed pulses.

In one embodiment, the pulses from the pulsed light source are provided by a repetition rate, such that the separation of pulses is less than 100 $\mu$s, more preferably around 10 $\mu$s.

In another embodiment, the pulses from the pulsed light source are provided by a repetition rate between 10 kHz and 10 MHz, preferably between 50 kHz and 200 kHz, more preferably around 80 kHz and 120 kHz, most preferably around 100 kHz.

In yet another embodiment, the pulses from the pulsed light source are provided by a pulse width, or a pulse duration, of less than 1000 fs, more preferably less than 500 fs, most preferably around 300 fs.

In an alternative embodiment, the pulses from the pulsed light source are provided by a pulse width, or a pulse duration, of between 10 fs and 100 fs, preferably between 20 fs and 40 fs, most preferably around 30 fs.

In a preferred embodiment, the pulsed light source is configured to generate pulses, wherein the maximum pulse energy of the pulses is less than 100 $\mu$J, such as around 40 $\mu$J.

In another preferred embodiment, the pulsed light source is configured to generate pulses, wherein the minimum pulse energy of the pulses is more than 10 $\mu$J, such as around 40 $\mu$J.

In some embodiments, the pulsed light source is configured to generate pulses, wherein the minimum pulse energy of the pulses is more 100 $\mu$J, preferably more than 1000 $\mu$J.

In one embodiment, the modulation-module is partly or fully integrated in the pulsed light source.

In another embodiment, the modulation-module is a waveform generator, wherein the waveform generator is configured to modulate an operational parameter of the pulsed light source. The operational parameter may for example be an electrical current used to drive the pulsed light source, such as a laser diode or a master oscillator power amplifier (MOPA).

In yet another embodiment, the modulation-module is configured for acting on the train of pump pulses, for example in the form of an attenuator, an amplifier, or any other device that can modify the peak power and/or pulse length of a pulse passing through the device. The modulation-module may be placed between the pulsed light source and the nonlinear element(s).

In some embodiments, the modulation-module comprises an acousto-optic modulator. A modulation-module like this may be fully integrated in the pulsed light source. The modulation-module may comprise several units, for example both an acousto-optic modulator and a temporal compression stage. In such a case, and for example where the temporal compression stage is neither fully nor partly integrated in the pulsed light source, but where the acoustio-optic modulator is fully integrated in the pulsed light source, the modulation-module is said to be partly integrated in the pulsed light source.

In one embodiment, the modulation-module comprises a temporal compression stage configured to modify the pulse width, $T_0$, of each of the pulses in the train of light-pulses or in the train of modified light-pulses, whereby each of the pulses defined by $N_{min}$ obtains a modified first pulse width, $T_1$, and whereby each of the pulses defined by $N_{max}$ obtains a modified second pulse width, $T_2$, wherein $T_1$ is different from $T_2$. By modifying the pulse width of each of the pulses in the train of light-pulses or in the train of modified light-pulses, the temporal compression stage may also spectrally broaden said light-pulses. Accordingly, in one embodiment, the temporal compression state is configured to spectrally broadening said light-pulses.

In a related embodiment, the temporal compression stage comprises an additional non-linear element, such as a hollow-core fiber. Such a hollow-core fiber may in a preferred embodiment be configured to spectrally broadening the train of light-pulses emitted from the pulsed light source, and further configured to form of a linear chirp across each of the light-pulses. In some embodiments, the hollow-core fiber, of the temporal compression stage, has a length that is less than 1 m, preferably less than 0.5, most preferably around 30 cm.

In another related embodiment, the temporal compression stage comprises a chirp-compensator. Such a chirp-compensator, for example configured to compensate for linear chirp, may for example comprise one or more mirrors, such as one or more dispersive mirrors. In a preferred embodiment, the chirp-compensator comprises two dispersive mirrors.

In yet another related embodiment, the first pulse width, $T_1$, is smaller than the second pulse width, $T_2$, preferably by a factor 1/2 or less, most preferably by a factor of 1/3 or less.

In some related embodiments, the first pulse width, $T_1$, and the second pulse width, $T_2$, are between 1 fs and 1000 fs.

In a most preferred embodiment, the first pulse width, $T_1$, and the second pulse width, $T_2$, are modified with the temporal compression stage such that each of the light-pulses defined by $N_{max}$ are spectrally broadened primarily into the visible domain, and such that each of the pulses defined by $N_{min}$ are spectrally broadened into the ultraviolet (UV) domain. The spectral broadening, as here disclosed, may for example take place when the temporal compression stage comprises a hollow-core fiber. Furthermore, and more specifically, the spectral broadening, as here disclosed, may for example take place when the hollow-core fiber, of the temporal compression stage, has a length of less than 1 m, such as less than 0.5 m, such as around 30 cm. Such a length may namely be responsible for preventing a maximum temporal compression, whereby the UV-edge is extended further towards lower wavelengths when the maximum soliton number, $N_{max}$, is increased.

In some embodiments, the visible domain and ultraviolet domain being generated by the spectral broadening combines to an extended spectrum that ranges from around 210 nm or less, and up to at least 900 nm, preferably up to at least 1000 nm, more preferably up to at least 2400 nm, most preferably up to at least 4000 nm.

*Pulse soliton-modulation-depth*

The pulse soliton-modulation-depth, dN, is defined in terms of the soliton number, N. As previously described, the soliton number is a well-known quantity, which is also able to be measured.

The coefficients, $\gamma$ and $\beta_2$, are determined by the non-linear element(s), whereas the peak-power, $P_0$, and the pulse width, $T_0$ are characteristics of the pulses.

The non-linear element(s) may change the characteristics of the light-pulses, such as for example spectrally broadening the light-pulses. For this reason, and in most embodiments, the soliton number is measured before the nonlinear element(s). This means that the peak-power, $P_0$, and the pulse width, $T_0$, in most embodiments are measured before the light pulses are being transmitted into the non-linear element(s), meaning after the modulation-module.

The coefficients $\gamma$ and $\beta_2$ may be known prior to using the supercontinuum light source, for example, they may be pre-measured from within the non-linear element(s), or measured during the use of the supercontinuum light source. Regardless of how the coefficients are measured, the coefficients $\gamma$ and $\beta_2$ are by definition measurable. Accordingly, the soliton number, comprising $\gamma$ and $\beta_2$, may be measured after the modulation-module, particularly due to the location of the non-linear element(s) being placed after the modulation-module.

In embodiments when the modulation-module comprises a temporal compression stage, the soliton number, particularly $T_0$ and $E_0$, may be measured at a location that is after the temporal compression stage.

In a preferred embodiment, the dN is larger than 10%, more preferably larger than 13%, most preferably larger than 16%, most preferably larger than 19%. An advantage of having such a large dN is not only to generate a wide spectrum, such as ranging from the visible domain and into the UV domain and/or IR domain, but also to raise the spectrum above a given noise floor, whereby the full potential, or the dynamic range, of a spectrometer is fully exploited, while at the same time to lower the SNR.

The inventors of the present disclosure have found that in some embodiments, if dN is enlarged too much, the desired wavelengths are not generated. For this reason, the inventors of the present disclosure have found an optimum. Accordingly, in another preferred embodiment, the dN is smaller than 45%, more preferably smaller than 40%, most preferably smaller than 35%, most preferably smaller than 30%.

An optimum for dN may be ranging from more than 10% to less than 45%, more preferably from more than 13% to less than 40%, most preferably from more than 16% to less than 35%, most preferably from more than 19% to less than 30%.

In a most preferred embodiment, the dN is responsible for generating the train of supercontinuum-pulses with wavelengths ranging from around 210 nm or less, and up to at least 900 nm, preferably up to at least 1000 nm, more preferably up to at least 2400 nm, most preferably up to at least 4000 nm.

*Plurality of modified light-pulses*

According to the present disclosure, the modified light-pulses are transmitted into the one or more non-linear element(s). Each of the modified light-pulses in the nonlinear element(s) may lead to the generation of an output pulse with a broadband optical spectrum, i.e. the train of supercontinuum-pulses. The PSD of such a spectrum is a function of wavelength and may depend on the peak-power and/or pulse length of the pulse used to generate the output pulse.

If two pulses of the modified light-pulses have different peak-powers and/or pulse lengths, the PSD profile over wavelength of the generated output pulses may be different. The inventors of the present disclosure have found that if the peak powers and pulse lengths of the pump pulses are set properly, a gap in the PSD profile of one of the generated output pulses may be compensated by the PSD profile provided by the other generated output pulse.

In one embodiment, for example to compensate for gaps in the PSD profile, the plurality of modified light-pulses is further defined, or set, by having intermediate soliton-numbers, $N_{int}$, wherein $N_{min} < N_{int} < N_{max}$.

Preferably, each of the pulses having the intermediate soliton numbers are spectrally broadened into a domain that is predominantly in the ultraviolet (UV) domain.

The inventors of the present disclosure have found that such modified light-pulses further provide an optimal compromise between a complete spectral coverage, use of the dynamic range of a spectrometer, a spectral edge in the UV-domain, and the effective repetition rate.

If a detector, for example present in a spectrometer, is used to detect the PSD of the plurality of output pulses over wavelength, it is usually not able to resolve the individual output pulses, but effectively detects an average PSD from the pulses that arrive at the detector in succession. The average PSD may thereby correspond to the average of the PSDs of the plurality of pulses. The plurality of modified light-pulses may for example have a particular repetition rate. The term "repetition rate" as used herein also applies to a sequence of pulses in which the individual pulses may have different peak powers. In the detected average PSD, a gap in a wavelength range of a PSD from one output pulse may be averaged out by the PSD of the other output pulse, such as having $N_{int}$. Accordingly, by providing light-pulses having $N_{int}$, an averaged optical spectrum with an improved PSD may be obtained.

In most embodiments, the light-pulses in the plurality of modified light-pulses are separated from each other by a time span, which is larger than the shortest pulse width in the plurality of modified light-pulses, preferably by a factor of 2 or more, more preferably by a factor of 10 or more, even more preferably by a factor of 100 or more, such as 1000 or more, most preferably by a factor of 10000 or more. Having a separation as here disclosed may generate a spectrum that is both wide, and has high intensities in the entire spectrum, while also being flat. Further, the use of non-overlapping pump pulses with different peak powers and/or pulse lengths, according to the present disclosure, provides that the PSD averaged over the respective output pulses may be increased - at least in a desired wavelength range, while the peak powers of the plurality of modified light-pulses may be kept at a relatively low level. By keeping a relatively low level of peak-powers, and separating the light pulses as here disclosed, the lifetime of the non-linear element(s) may further be increased.

In a preferred embodiment, the plurality of modified light-pulses is defined by a repetitive pattern, i.e. a periodic structure, having a subset of pulses, n, such that the subset of pulses, n, comprises one or more pulses, $n_1$, said pulses being defined by $N_{max}$, and one or more pulses, $n_2$, said pulses being defined by $N_{min}$. Using the repetitive pattern as here disclosed, for example as an alternative to a non-repetitive pattern, such as a chaotic pattern with other pulses, has been found to be more efficient in generating the desired raised and flat spectrum. Furthermore, using the repetitive pattern, with the presently disclosed dN, has been found to generate a spectrum that spans into the UV-domain, i.e. a spectrum with wavelengths ranging from 210 nm or less, and up to 400 nm. Even further, when the repetitive pattern is as disclosed, it may produce intensities within the measured spectrum, such as ranging from 210 nm and up to 900 nm, that are well above zero for all wavelengths in the UV-domain, but also well above zero for the wavelengths up to 900 nm. Also, when the repetitive pattern is as disclosed, it may produce a measured spectrum, such as ranging from 210 nm and up to 900 nm, that has a standard deviation below 10%, or below 8%, or below 7%, preferably below 5%. The reason why the repetitive pattern, as here disclosed may produce a flat spectrum as disclosed above, is because the periodic structure of the modified train of light pulses is selected such that: (a) a first power spectral density of the measured spectrum for a first region of wavelengths in the UV-domain is increased in comparison to not modulating the pulse-property with the modulation-module, and (b) a second power spectral density of the measured spectrum for a second region of wavelengths in the UV-domain is decreased in comparison to not modulating the pulse-property with the modulation-module.

In a more preferred embodiment, the subset of pulses, n, is between n=10 and n=20 pulses, preferably around n=15 pulses, and/or wherein the first number of pulses, $n_1$, is larger than the second number of pulses, $n_2$, preferably by a factor of 2 or more, more preferably by a factor of 3 or more, more preferably by a factor of 4 or more, most preferably by a factor of 5 or more. For example, in an embodiment, where the plurality of modified light-pulses is n=15 pulses, there may be a first number of pulses being $n_1=10$ pulses, for example having $N_{max}$ and a second number of pulses being $n_2=2$ pulses, for example having $N_{min}$. The remaining n=3 modified light-pulses may be defined, or set, by having intermediate soliton numbers, $N_{int}$. In a most preferred embodiment, the intermediate soliton number, $N_{int}$, vary. The 10 out of 15 pulses with $N_{min}$ may be responsible for forming the light in the visible domain, and the 2 out of 15 pulses with $N_{max}$ may be responsible for forming light in the ultraviolet domain.

The inventors of the present disclosure have found that the subset of light-pulses, defining a repetitive pattern, may be repeated several times within an integration time of a detector or spectrometer configured to measure the spectrum of the supercontinuum light transmitted by the presently disclosed supercontinuum light source.

Accordingly, in another embodiment, the subset of light-pulses is repeated P times within an integration time of a detector or spectrometer configured to measure the spectrum of the train of supercontinuum-pulses, where P is an integer. The spectrometer may for example be the spectrometer comprised by the scatterometry device according to the second aspect of the present disclosure.

The minimum integration time of a detector or spectrometer may be in the order of milli-seconds, such as less than 50 ms, such as less than 10 ms, such as less than 5 ms. Having a sufficiently high repetition rate of the pulses, such as in the order of microseconds, means that even with a minimum integration time as described above, the subset of pulses may be repeated up to P=1000 times. For this reason, there may be a near infinite number of ways of ordering the light pulses while conserving the ratio of the pulses. The inventors of the present disclosure have found that the ordering of the light pulses, by inspecting a finite number of ways, did neither change the generated spectrum nor the standard deviation, i.e. the flatness, of the spectrum.

Accordingly, in some embodiments, the P repeated subset of light-pulses are re-ordered. For example, the re-ordering may be such that all the light-pulses having $N_{max}$, or a part thereof, are grouped together, and/or all the light-pulses having $N_{min}$, or a part thereof, are grouped together, and/or all of the light-pulses having $N_{int}$, or a part thereof are grouped together. While this re-ordering may neither change the generated spectrum nor the flatness of the spectrum, the re-ordering may have other effects, such as extending the lifetime of the pulsed light source. For example, if the pulsed light source, such as a laser diode, is modulated by an integrated modulation-module, such as by controlling the electrical current used to drive the pulsed light source, then a rapid shift between high and low electric currents may damage the pulsed light source. By then re-ordering the pulses, as described above, the rapid shift between high and low electric current may no longer be present, and thus prevent the pulsed light source from being damaged.

*Scatterometry device*

In one embodiment, the scatterometry device is configured to hold an object to be analyzed by scatterometry such that the train of supercontinuum-pulses are guided from the one or more non-linear element(s) and onto the object, wherefrom the train of supercontinuum-pulses are further guided into the spectrometer.

As previously described, the measured spectrum by the scatterometry device may in one embodiment be provided by measuring the average output power, or average output intensity, of the supercontinuum light source over a time-period of less than 1 second. However, in another embodiment, the measured spectrum by the scatterometry device may be provided by measuring the average output power of the supercontinuum light source over a time-period of less than 100 ms, such as less than 50 ms, such as less than 10 ms, such as less than 5 ms. The time-period as here defined may correspond to the integration time of the spectrometer.

In a most preferred embodiment, the spectrometer of the scatterometry device comprises a detector, wherein the detector is a silicon-based detector. Such a detector may be responsive in the wavelength range from 200 nm and up to 1100 nm, which is therefore optimal for scatterometry and the presently disclosed supercontinuum light source.

## Examples

*Example 1 - Generation of supercontinuum*

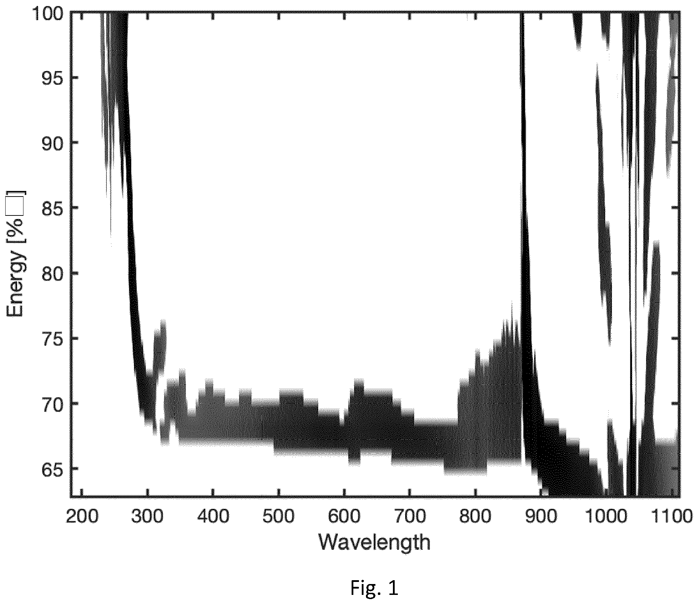

**Fig. 1** shows an example of where light-pulses with relatively low energy, $E_{min}$, are used to generate visible light, and pulses with relatively high energy, $E_{max}$, are used to generate ultraviolet light. **Fig. 1** shows more specifically the development of a supercontinuum spectrum as a function of the pump energy in an experimental setup having the supercontinuum light source according to the present disclosure. From **Fig. 1** it is seen that the wavelengths in the visible domain (from around 400 nm to 700 nm) are generated by light-pulses having relatively low energy (around 70% of the maximum energy), whereas the wavelengths in the ultraviolet domain (below 380 nm), are generated by light-pulses having relatively high energy (around 70% to 100% of the maximum energy). Accordingly, from **Fig. 1,** and in view of the difference in energy, dE, it may be deduced that when dE is small, one can generate light in either the UV-domain (by only having pulses with relatively high energy) or in the visible domain and an upper part of the UV-domain, for example from around 300 nm and to around 380 nm (by only having pulses with relatively low energy). Wavelengths in the near infrared (NIR) domain, from around 700-1100 nm may be generated by having pulses with energies between 65% to 70% of the maximum energy. As can be understood from **Fig. 1,** a supercontinuum light source having wavelengths in both the visible domain and the near infrared domain may be generated by having dE, thus also dN, rather small. However, as can also be deduced from **Fig. 1,** a supercontinuum light source having wavelengths in both the visible and the UV domain may be generated by having a relatively large dN. According to the present disclosure, the inventors have found than when dN is larger than 6%, the spectrum becomes very flat and with a PSD that is above the noise floor of a given spectrometer and/or detector. Further, in one embodiment, as for example shown in and understood by **Fig. 1,** the presently claimed dN may also be responsible for generating light having wavelengths in both the visible domain and the UV domain, even extending into the IR domain.

*Example 2 - Plurality of modified light-pulses*

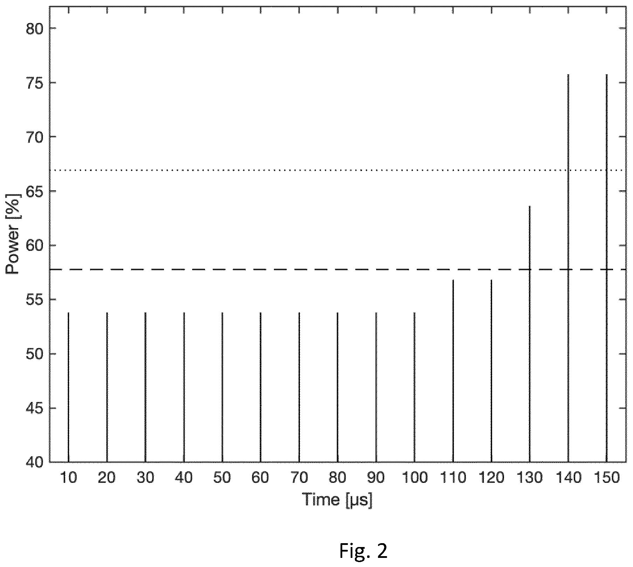

**Fig. 2** shows an example of a plurality of modified light-pulses according to the present disclosure. From **Fig. 2,** it can be seen that each of the modified light pulses is defined by at least a peak-power, $P_0$, and a pulse width, $T_0$. In the present example, the pulse width, $T_0$, of each pulse is in the order of femtoseconds, such as between 10 and 100 femtoseconds. The present example shows that each pulse in the train of pulses is separated from each other by a time span, which is larger than the minimum pulse width, here around 10 femtoseconds. Since the separation of pulses is around 10 $\mu$s, the time span is larger than the width of each pulse by a factor of around 1000. Furthermore, as can be seen from **Fig. 2,** the plurality of modified light-pulses is defined by a repetitive pattern having a subset of pulses, n, here the subset comprises n=15 pulses.

The first ten light-pulses in the train of modified light-pulses have a relatively low peak power, which in this example means less than 55% of the maximum peak power, here around 54% of the maximum peak power.

The last two light-pulses in the train of modified light-pulses have a relatively high peak power, which in this example means more than 65% of the maximum peak power, here around 76% of the maximum peak power.

From this example, it is seen that the first number of pulses, $n_1$, is larger than the second number of pulses, $n_2$, here by a factor of $n_1/n_2=10/2=5$.

The ten first pulses with relatively low peak power have a relatively long pulse width, but this cannot be seen from the figure. Also, the two last pulses with relatively high peak power have a relatively short pulse width, but this cannot be seen from the figure. However, due to the pulse widths as described above, the ten first pulses are calculated to be pulses with $N_{max}$ and are responsible for generating primarily visible light. The two last pulses are calculated to be pulses with $N_{min}$ and are responsible for generating ultraviolet light.

Further, from this example, out of the 15 light-pulses, the remaining three light-pulses are defined by having intermediate soliton numbers, $N_{int}$. These three light-pulses also have intermediate peak powers, which is between the low and high peak power as described above, which in this example means peak powers between 55% and 65% of the maximum peak power. The intermediate soliton number, $N_{int}$, for these light-pulses vary. These pulses are responsible for also generating ultraviolet light.

The average power in the train of light pulses is indicated by the dashed line in **Fig. 2.** This may be compared to a setup where the power is set to a constant peak power and/or constant pulse energy (un-modulated) scheme, which is indicated by the dotted line in **Fig. 2,** showing constant peak powers of around 65.9% of the maximum peak power. In terms of pulse energy, the pulse energies of the light-pulses were kept constant at 58% of the maximum pulse energy. Accordingly, it is seen that the average power used in the presently disclosed (modulated) supercontinuum light-source is a bit lower (about 10 percent points) than using an un-modulated supercontinuum light-source. Accordingly, the presently discloses modulated supercontinuum light-source used less average power and may thus extend the life-time of the pulsed light source and/or the non-linear element(s).

*Example 3 - Generated spectrum*

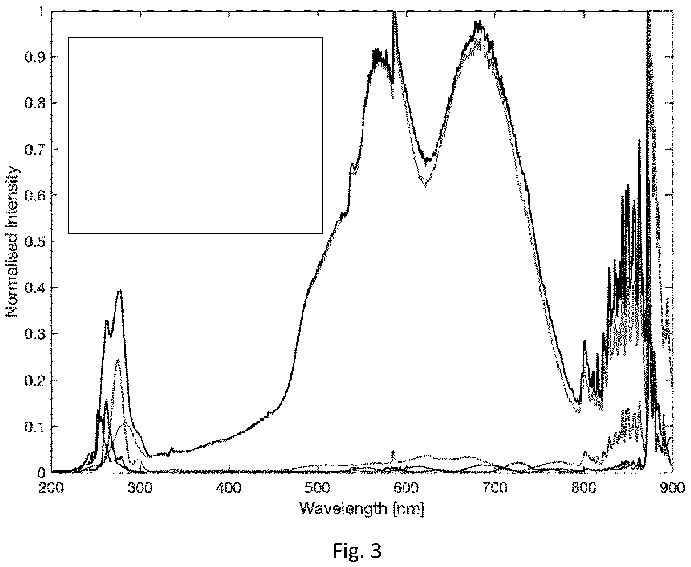

The pulse-modulation scheme as described in example 2 results in generating individual spectra and an averaged or composite modulated spectrum. **Fig. 3** shows an example of individual spectra and the composite modulated spectrum generated by the modified train of pulses as exemplified in **Fig. 2.** The modulated spectrum (shown in black) and the individual spectra (orange, green, blue, and red) are shown with respect to normalized intensity. From **Fig. 3** it is seen that the measured spectrum ranges from around 210 nm (since the normalized intensity here is above zero) and up to 900 nm (since the normalized intensity here is also above zero). Nowhere in-between 210 nm and 900 is the normalized intensity zero. In other words, the entire spectrum has a measured non-zero normalized intensity-value, which therefore makes the spectrum ideal for scatterometry.

From **Fig. 3,** it can also be seen that the light-pulses with relatively low energy are responsible for generating a spectrum (the orange curve) with wavelengths that are primarily in the visible domain. Further, the light-pulses with relatively high energy are responsible for generating a spectrum with wavelengths that spans into the UV-domain with a peak around 285 nm. Even further, the light-pulses with relatively low energy are responsible for generating a spectrum with wavelengths that spans into the IR-domain with a peak around 850 nm. Using light-pulses with only a relatively low energy (as shown here) is useful in many applications. Therefore, having additional pulses that vary only a little from the pulses with the relatively low energy, thus having a small dN, i.e. of less than 6%, is applicable for many applications. However, by increasing dN, thus providing additional pulses with different powers and/or energies, it is seen that light-pulses with relatively high energy are now responsible for generating spectra (the green, blue and red curves) with wavelengths that are primarily in the UV-domain and the IR-domain. As can be seen from **Fig. 3,** increasing the power of the light -pulses, i.e. by introducing additional light-pulses having relatively higher powers, provides spectra with peaks around 280 nm (the green curve), 277 nm (the blue curve) and 275 nm (the red curve). Accordingly, the pulses with the relatively high powers are firstly responsible for extending the average and/or measured spectrum into a lower region of the UV-domain.

To see further advantages of the proposed modulation, and thus the advantages of the generated spectrum, the normalized intensities in the entire spectrum (210 nm to 900 nm) may be compared to a spectrum that is generated by a non-modulated source, and a plasma lamp. Such a comparison is made in **Fig. 4.**

In **Fig. 4(a)** is shown experimental data of a measured spectrum of a (modulated) supercontinuum light source according to the present disclosure (unbroken green curve), an un-modulated supercontinuum light-source (dotted and dashed orange curve), and a plasma arc lamp (dashed dark blue curve).

In **Fig. 4(b)** is shown the measured standard deviation across 250 spectra for a supercontinuum light source according to the present disclosure (unbroken green curve), an un-modulated supercontinuum light-source (dotted and dashed orange curve), and a plasma arc lamp (dashed dark blue curve). Each of the 250 spectra is measured using an integration time of 15 ms. In other words, the measured spectrum is provided by averaging over a time period of less than 1 second, which by definition is also the measured spectrum. Measuring the 250 spectra, is equivalent to having 3.75 seconds of integration time.

From **Fig. 4(a),** it is seen that the modulated supercontinuum light source according to the present disclosure has a measured spectrum (the unbroken green curve), which in comparison to the un-modulated light source (where dN=0), that on average is with higher intensities across the entire measured spectrum. More importantly, the spectrum produced by the un-modulated light source has local dips that drop below, or near the limit of, the dynamic range of the spectrometer, especially in the region between 300 nm and 400 nm, meaning it is not optimal for use in scatterometry applications. **Fig. 4(a)** here specifically shows that the measured spectrum from the modulated supercontinuum light source according to the present disclosure has been raised in comparison to an un-modulated supercontinuum light-source, making it for example more optimal for scatterometry applications.

Also, in comparison to a plasma lamp, the measured spectrum from the modulated supercontinuum light source according to the present disclosure extends both into the UV domain and IR domain, where the intensities are much higher, thus with much less SNR. **Fig. 4(a)** thus generally shows that the spectrum is both raised to above the noise floor of the given spectrometer, and that the spectrum is also extended in wavelength range.

From **Fig. 4(b),** it is seen that the modulated supercontinuum light source according to the present disclosure has a standard variation of the measured spectrum (the unbroken green curve), which in comparison to the un-modulated light source (where dN=0), is smaller across the entire measured spectrum. Thus, **Fig. 4(b)** specifically shows that the standard variation of the measured spectrum from the modulated supercontinuum light source according to the present disclosure has been lowered in comparison to that generated by an un-modulated supercontinuum light-source, but also in comparison to that by a plasma arc lamp, however predominantly for wavelengths in the UV domain and the IR domain.

*Example 4 - An embodiment of a supercontinuum light source according to the present disclosure*

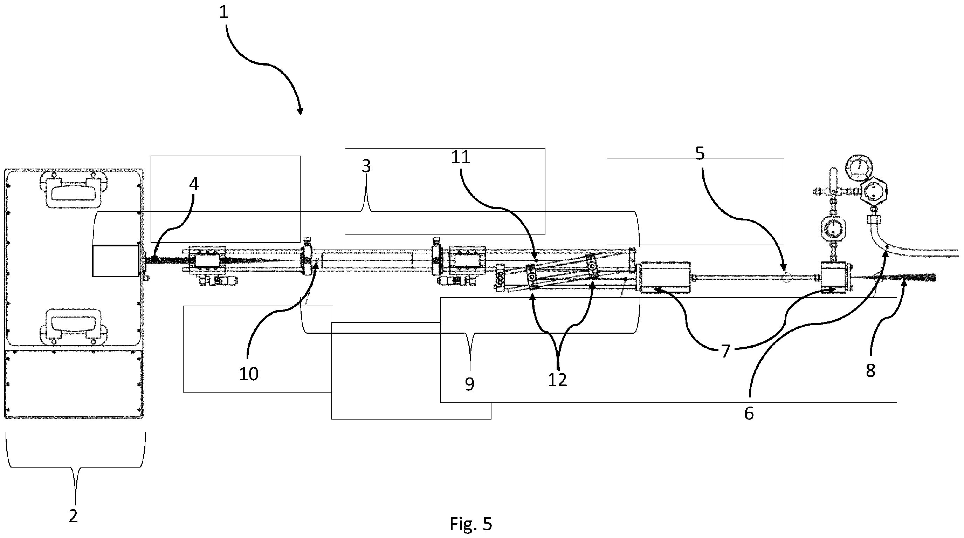

**Fig. 5** shows an embodiment of a supercontinuum light source **1** according to the present disclosure. The supercontinuum light source as shown in **Fig. 5** has been experimentally set up and used to produce the spectra of **Fig. 3** and **Fig. 4,** thus having the modified light-pulses as shown in **Fig. 2,** based on the understanding of the development of the spectrum as shown in **Fig. 1.**

In **Fig. 5** is firstly shown the supercontinuum light source **1,** comprising a pulsed light source **2** configured to emit a train of light-pulses.

The supercontinuum light source **1** further comprises a modulation-module **3** configured to modulate the train of light-pulses, thereby producing a modified train of light-pulses **4,** wherein the modified train of light-pulses **4** comprises a plurality of modified light-pulses, wherein each of the plurality of modified light-pulses is defined by at least: a peak-power, $P_0$, and a pulse width, $T_0$. The modulation-module **3** is in this embodiment partly integrated in the pulses light source **2.**

The supercontinuum light source **1** further comprises a non-linear element **5** being defined by at least: a non-linear coefficient, $\gamma$, and a group-velocity dispersion parameter, $\beta_2$. In this embodiment, the non-linear element **5** comprises a hollow-core fiber, wherein the hollow-core fiber is filled with a gas. The gas is here supplied to the hollow-core fiber via a gas-supporting unit **6,** and a gas cell **7.** In this embodiment, the gas is Argon being pressurized to a pressure of more than 2 bars, in this example more than 4 bars, more specifically 4.3 bars (absolute pressure).

Each of the plurality of modified light-pulses is further defined by a soliton number, N, where $N^2 = T_0^2 \gamma P_0/|\beta_2|$

The non-linear element **5** is configured to spectrally broadening the plurality of modified light-pulses, thereby generating a train of supercontinuum-pulses **8.**

The plurality of modified light-pulses entering the non-linear element **5** is defined by having: a maximum soliton-number, $N_{max}$, and a minimum soliton-number, $N_{min}$. Further, in this example, the plurality of modified light-pulses is modified, by the modulation-module **3** such that the pulse soliton-modulation-depth, $dN = (N_{max}-N_{min})/(N_{max}+ N_{min})$, is larger than 6%.

The modulation-module **3** further comprises a temporal compression stage **9** configured to modify the pulse width, $T_0$, of each of the pulses in the train of light-pulses or in the train of modified light-pulses. By this configuration, each of the pulses defined by $N_{min}$ has a first pulse width, $T_1$, and each of the pulses defined by $N_{max}$ has a second pulse width, $T_2$, resulting in $T_1$ being different from $T_2$. In this example, the temporal compression stage **9** comprises an additional non-linear element, here another hollow-core fiber **10.** This hollow-core fiber **10** is configured to spectrally broadening the train of light-pulses emitted from the pulsed light source **2,** which in this example are the modified train of light-pulses **4.** By spectrally broadening, the second hollow-core fiber **10** introduces a linear chirp across the modified train of light-pulses **4.** The temporal compression stage **9** further comprises a chirp-compensator **11.** This chirp-compensator is configured to compensate for linear chirp and comprises two dispersive mirrors **12.**

The pulsed light source **2** in this embodiment operates at 100 kHz and provides light-pulses having a maximum pulse energy of 40 μJ. The light pulses originating from the pulsed light source **2** have a duration of 300 fs. The temporal compression stage **9** compresses the light-pulses in time down to below 100 fs.

The non-linear element, i.e. the first hollow-core fiber **5,** and the second hollow-core fiber **10,** are both anti-resonant (AR) hollow-core fibers with 7 capillaries.

The second hollow-core fiber **10** has an internal core diameter of 27 μm, a capillary wall thickness of approximately 780nm, and a length of approximately 30cm. It is mounted open-ended in both ends, i.e., it is subject to ambient laboratory conditions.

The first hollow-core fiber **5** has a core diameter of 50 μm, a capillary wall thickness of approximately 830nm, and a length of approximately 30cm.

The setup as described here was also used to produce the data for the un-modulated supercontinuum light source, as shown in **Fig. 4,** but with the modulation-module turned off. As described in relation to **Fig. 2,** the energies of the pulses in the un-modulated supercontinuum light source were kept constant at 65.9% of the maximum pulse energy, corresponding to pulse energies of 26.4 μJ.

## Claims

1. A supercontinuum light source, comprising:

   - a pulsed light source configured to emit a train of light-pulses;
   - a modulation-module configured to modulate the train of light-pulses, thereby producing a modified train of light-pulses, wherein the modified train of light-pulses comprises a plurality of modified light-pulses, wherein each of the plurality of modified light-pulses is defined by at least:

     ◦ a peak-power, $P_0$, and
     ◦ a pulse width, $T_0$, and;

   - one or more non-linear element(s) being defined by at least:

     ◦ a non-linear coefficient, $\gamma$, and
     ◦ a group-velocity dispersion parameter, $\beta_2$,

   whereby each of the plurality of modified light-pulses entering the nonlinear element(s) is defined by:

     ◦ a soliton number, N, where $N^2 = T_0^2 \gamma P_0/|\beta_2|$,

   wherein said non-linear element(s) is/are configured to spectrally broadening the plurality of modified light-pulses, thereby generating a train of supercontinuum-pulses, and
   wherein the plurality of modified light-pulses entering the non-linear element(s) is further defined by having:

∘ a maximum soliton-number, $N_{max}$, and
∘ a minimum soliton-number, $N_{min}$, and

wherein the plurality of modified light-pulses is modified such that:

∘ the pulse soliton-modulation-depth,
$dN = (N_{max}-N_{min})/(N_{max}+ N_{min})$, is larger than 6%.

2. The supercontinuum light source according to claim 1, wherein the one or more non-linear element(s) comprises a hollow-core fiber, and wherein the hollow-core fiber is filled with a gas.

3. The supercontinuum light source according to any of the preceding claims, wherein the modulation-module comprises a temporal compression stage configured to modify the pulse width, $T_0$, of each of the pulses in the train of light-pulses or in the train of modified light-pulses, whereby each of the pulses defined by $N_{min}$ has a first pulse width, $T_1$, and whereby each of the pulses defined by $N_{max}$ has a second pulse width, $T_2$, wherein $T_1$ is different from $T_2$.

4. The supercontinuum light source according to claim 3, wherein the first pulse width, $T_1$, is smaller than the second pulse width, $T_2$, preferably by a factor 1/2 or less, most preferably by a factor of 1/3 or less.

5. The supercontinuum light source according to claim 3, wherein the first pulse width, $T_1$, and the second pulse width, $T_2$, are between 1 fs and 1000 fs.

6. The supercontinuum light source according to claim 3, wherein the first pulse width, $T_1$, and the second pulse width, $T_2$, are modified such that each of the light-pulses defined by $N_{max}$ are spectrally broadened primarily into the visible domain, and such that each of the pulses defined by $N_{min}$ are spectrally broadened into the ultraviolet domain.

7. The supercontinuum light source according to claim 6, wherein the visible domain and ultraviolet domain being generated by the spectral broadening combines to an extended spectrum that ranges from around 210 nm or less, and up to at least 900 nm, preferably up to at least 1000 nm, more preferably up to at least 2400 nm, most preferably up to at least 4000 nm.

8. The supercontinuum light source according to any of the preceding claims, wherein dN is larger than 10%, more preferably larger than 13%, most preferably larger than 16%, most preferably larger than 19%.

9. The supercontinuum light source according to claim 8, wherein dN is smaller than 45%, more preferably smaller than 40%, most preferably smaller than 35%, most preferably smaller than 30%.

10. The supercontinuum light source according to any of the preceding claims, wherein dN is responsible for generating the train of supercontinuum-pulses with wavelengths ranging from around 210 nm or less, and up to at least 900 nm, preferably up to at least 1000 nm, more preferably up to at least 2400 nm, most preferably up to at least 4000 nm.

11. The supercontinuum light source according to any of the preceding claims, wherein the light-pulses in the plurality of modified light-pulses are separated from each other by a time span, which is larger than the shortest pulse width in the plurality of modified light-pulses, preferably by a factor of 2 or more, more preferably by a factor of 10 or more, even more preferably by a factor of 100 or more, such as 1000 or more, most preferably by a factor of 10000 or more.

12. The supercontinuum light source according to any of the preceding claims, wherein the plurality of modified light-pulses is defined by a repetitive pattern having a subset of pulses, n, such that the subset of pulses, n, comprises one or more pulses, $n_1$, said pulses being defined by $N_{max}$, and one or more pulses, $n_2$, said pulses being defined by $N_{min}$.

13. The supercontinuum light source according to claim 12, wherein the subset of pulses, n, is between n=10 and n=20 pulses, preferably around n=15 pulses, and/or wherein the first number of pulses, $n_1$, is larger than the second number of pulses, $n_2$, preferably by a factor of 2 or more, more preferably by a factor of 3 or more, more preferably by a factor of 4 or more, most preferably by a factor of 5 or more.

14. A scatterometry device, comprising:

- the supercontinuum light source according to any of the claims 1-13; and
- a spectrometer configured to measure the spectrum of the train of super-continuum-pulses, whereby a measured spectrum is provided.

15. The device according to claim 14, wherein the device is configured to hold an object to be analyzed by scatterometry such that the train of supercontinuum-pulses are guided from the one or more non-linear element(s) and onto the object, wherefrom the train of supercontinuum-pulses are further guided into the spectrometer.

Fig. 1

Fig. 2

Fig. 3

Fig. 4

Fig. 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2013/178232 A1 (NKT PHOTONICS AS [DK]) 5 December 2013 (2013-12-05) * abstract; figures 1a,2a * * page 4, line 1 - page 17, line 30; claim 1 * | 1-15 | INV. G02F1/35 |
| A | EP 3 913 429 A1 (ASML NETHERLANDS BV [NL]) 24 November 2021 (2021-11-24) * abstract; claims 1-13; figures 8,9 * * paragraphs [0006], [0007], [0091] - [0103] * | 1-15 | |
| A | WO 2022/194477 A1 (ASML NETHERLANDS BV [NL]) 22 September 2022 (2022-09-22) * abstract; figures 8,9 * * paragraphs [0090] - [0105] * | 1-15 | |
| A | WO 2022/135823 A1 (ASML NETHERLANDS BV [NL]) 30 June 2022 (2022-06-30) * abstract; figures 7,8 * * paragraphs [0091] - [0107]; claim 1 * | 1-15 | |
| A | SMITH CALLUM R. ET AL: "Spectral broadening of ultraviolet dispersive waves in gas-filled hollow-core fiber using pump pulse modulation", OPTICS LETTERS, vol. 45, no. 24, 14 December 2020 (2020-12-14), page 6744, XP093054029, US ISSN: 0146-9592, DOI: 10.1364/OL.412652 Retrieved from the Internet: URL:https://opg.optica.org/view_article.cfm?pdfKey=3ba35288-8c0c-47db-a94d77555204e668_444732> * the whole document * | 1-15 | TECHNICAL FIELDS SEARCHED (IPC) G02F |

The present search report has been drawn up for all claims

| Place of search | Date of completion of the search | Examiner |
|---|---|---|
| The Hague | 13 June 2023 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6005

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2023

| Patent document cited in search report | | | Publication date | Patent family member(s) | | | Publication date |
|---|---|---|---|---|---|---|---|
| WO 2013178232 | A1 | | 05-12-2013 | CA | 2874787 | A1 | 05-12-2013 |
| | | | | CN | 104541198 | A | 22-04-2015 |
| | | | | CN | 113013716 | A | 22-06-2021 |
| | | | | EP | 2992384 | A1 | 09-03-2016 |
| | | | | EP | 3575860 | A1 | 04-12-2019 |
| | | | | ES | 2742033 | T3 | 12-02-2020 |
| | | | | JP | 6701259 | B2 | 27-05-2020 |
| | | | | JP | 2015519605 | A | 09-07-2015 |
| | | | | JP | 2018146971 | A | 20-09-2018 |
| | | | | US | 2015138507 | A1 | 21-05-2015 |
| | | | | US | 2017150880 | A1 | 01-06-2017 |
| | | | | US | 2018360302 | A1 | 20-12-2018 |
| | | | | US | 2020154993 | A1 | 21-05-2020 |
| | | | | US | 2022233067 | A1 | 28-07-2022 |
| | | | | WO | 2013178232 | A1 | 05-12-2013 |
| EP 3913429 | A1 | | 24-11-2021 | CN | 115668050 | A | 31-01-2023 |
| | | | | DK | 3913430 | T3 | 21-11-2022 |
| | | | | EP | 3913429 | A1 | 24-11-2021 |
| | | | | EP | 3913430 | A1 | 24-11-2021 |
| | | | | IL | 297491 | A | 01-12-2022 |
| | | | | KR | 20230004745 | A | 06-01-2023 |
| | | | | TW | 202209004 | A | 01-03-2022 |
| | | | | US | 2021364885 | A1 | 25-11-2021 |
| | | | | WO | 2021233626 | A1 | 25-11-2021 |
| WO 2022194477 | A1 | | 22-09-2022 | TW | 202240220 | A | 16-10-2022 |
| | | | | WO | 2022194477 | A1 | 22-09-2022 |
| WO 2022135823 | A1 | | 30-06-2022 | TW | 202240307 | A | 16-10-2022 |
| | | | | WO | 2022135823 | A1 | 30-06-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160164242 A
- US 2009095890 A
- US 20210364885 A

**Non-patent literature cited in the description**

- **CALLUM R. SMITH.** Spectral broadening of ultraviolet dispersive waves in gas-filled hollow-core fiber using pump pulse modulation. *Optics Letters,* 15 December 2020, vol. 45 (24
- **DAVID CASTELLÓ -LURBE.** Measurement of the soliton number in guiding media through continuum generation. *Optics Letters,* 2020, vol. 45 (16), 4432-4435